# EUROPÄISCHE PATENTANMELDUNG

(11) **EP 4 776 172 A1**
(43) Veröffentlichungstag der Anmeldung: **15.07.2026**
(21) Anmeldenummer: 25225285.3
(22) Anmeldetag: 18.12.2025
(51) Int. Cl.: G06F 30/27, B29C 49/06, B65D 1/00

(54) **VERFAHREN ZUM ERSTELLEN VON BEHÄLTNISDESIGNS**

(30) Priorität: 09.01.2025 DE 102025100598
(71) Anmelder: Krones AG, 93073 Neutraubling (DE)
(72) Erfinder: Aust, Robert, 93073 Neutraubling (DE); Weitzer, Tobias, 93073 Neutraubling (DE)
(74) Vertreter: Hannke Bittner & Partner mbB Regensburg

(57) **Zusammenfassung**

Verfahren zum Entwerfen von Behältnissen und insbesondere von Kunststoffbehältnissen und insbesondere von Getränkebehältnissen, wobei eine Vielzahl von für ein zu entwerfendes Behältnis charakteristischen physikalischen Parameter (P1, P2, ...Pn) berücksichtigt wird, dadurch gekennzeichnet, dass für wenigstens einen Verfahrensschritt des Verfahren eine künstliche Intelligenz eingesetzt wird, wobei zumindest ein Teil dieser physikalischen Parameter dieser künstlichen Intelligenz (KI) als erste Trainingsdaten zur Verfügung gestellt wird.

## Beschreibung

Die vorliegende Erfindung bezieht sich auf ein Verfahren zur Erstellung von Behältnisdesigns und ein mit diesem Verfahren erstelltes Behältnis. Aus dem Stand der Technik sind unterschiedlichste Behältnisse und auch unterschiedlichste Kunststoffbehältnisse bekannt. Diese weisen ebenfalls sehr unterschiedliche Designs auf. Bei dem Entwurf derartiger Behältnisdesigns muss auf sehr viele Faktoren geachtet werden, beispielsweise dass das Behältnis eine ausreichende Stabilität aufweist.

Bei der Erstellung von Behältnisdesigns, insbesondere von PET - Behältnissen allgemein von Kunststoffbehältnissen kommen derzeit eine Vielzahl von Technologien und Verfahren zum Einsatz, die jedoch ständig weiterentwickelt werden.

Im Rahmen der vorliegenden Anmeldung werden unter Behältnissen sowohl fertiggestellte Behältnisse verstanden als auch Halbfabrikate wie insbesondere Kunststoffvorformlinge, aus welchen insbesondere durch Blasformvorgänge Kunststoffbehältnisse fertigbar sind. Derartige Kunststoffvorformlinge werden üblicherweise mittels Spritzgießmaschinen hergestellt. Diese Kunststoffvorformlinge weisen bereits einen endgültig ausgebildeten Mündungsbereich, üblicherweise mit einem Gewinde auf und einen Grundkörper, der durch einen Blasformvorgang expandiert wird.

Mit CAD Systemen können Entwickler 3-D Modelle von Behältnissen erstellen und diese simulieren, bevor sie in die Produktion gehen. Dies ermöglicht es bereits jetzt, Probleme im Vorfeld zu identifizieren und gegebenenfalls zu lösen und sicherzustellen, dass das Design den Anforderungen entspricht.

Durch den Einsatz von Rapid-Prototyping - Verfahren wie beispielsweise Stereolithografie (SLA) und Fused Deposition Modelling (FDM) können Entwickler schnell Prototypen von Behältnissen erstellen und testen. Dies beschleunigt den Entwicklungsprozess und ermöglicht es, Änderungen schnell umzusetzen.

Auch die Nachhaltigkeit ist ein wichtiger Faktor bei der Herstellung von PET-Behältnissen. Die Designer sollten den Einfluss des Behältnisgewichts sowie die Verwendung von recyceltem (PET) Material auf die Verarbeitbarkeit und die Performance bzw. die Eigenschaften des Behältnisses bei der Verwendung berücksichtigen.

Daneben ist auch die Stabilität des Behältnisses, insbesondere auch die Stapelbarkeit und die Druckwiderstandsfähigkeit insbesondere bei der Verwendung von karbonisierten Getränken ein wichtiger Faktor.

Die US 2021 036 5614A1 offenbart ein Computer-implementiertes Verfahren, wobei mithilfe eines maschinellen Lernmodells ein Designvorschlag erzeugt wird.

Die DE10 2022 122 882 A1 beschreibt, dass Produktionsdaten eines Behältnisses und Performancedaten in Verbindung gebracht werden. Dabei wird mittels eines Modells ein Zusammenhang zwischen Produktionsdaten und Performancedaten erstellt.

Die DE10 2021 133 483 A1 offenbart ein Verfahren zur Gestaltung eines Exterieur Designs mittels eines Lernagenten. Dabei wird ein von einem Benutzer erstelltes Design durch ein Generative Adversarial Netzwerk geändert und ein Vorschlag erstellt, welcher dann von einem Benutzer angenommen werden kann.

Obwohl die oben genannten Technologien und Verfahren viele Vorteile bieten, gibt es auch einige Nachteile. So können Prototypingverfahren teuer sein, wenn diese viele verschiedene Varianten abdecken sollen.

Das Design von Behältnissen (einschließlich Kunststoffvorformlingen) kann ein langer und komplexer Prozess sein, insbesondere wenn es um die Überprüfung von Designänderungen und Simulationen geht.

CAD-Systeme und automatisierte Prozesse können die Kreativität des Designers einschränken, da sie nur bestimmte Arten von Designs erstellen können.

Mittlerweile gibt es sehr viele verschiedene Prozesse, Maschinentypen, Kundenspezifikationen usw., welche zu berücksichtigen sind. Diese machen es für einen Designer fast unmöglich, alle im Prozess der Behältnis - Designerstellung wesentlichen Aspekte zu berücksichtigen, da dieser nicht mehr alle Informationen zur Verfügung hat.

Der vorliegenden Erfindung liegt daher die Aufgabe zugrunde, ein Konzept und/oder ein Verfahren zur Verfügung zu stellen, welche die Erstellung von Behältnisdesigns, insbesondere von Kunststoffbehältnissen erleichtern. Dabei soll insbesondere eine Möglichkeit geschaffen werden, um unterschiedlichste und auch vielfältigste Faktoren zu berücksichtigen.

Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zum Entwerfen von Behältnissen und insbesondere von Kunststoffbehältnissen und insbesondere von Getränkebehältnissen wird eine Vielzahl von für das Entwerfen des Behältnisses charakteristischen physikalischen Parametern berücksichtigt.

Erfindungsgemäß wird für wenigstens einen Verfahrensschritt des Verfahrens eine künstliche Intelligenz (KI) eingesetzt, wobei zumindest ein Teil dieser physikalischen Parameter dieser künstlichen Intelligenz (KI) als erste Trainingsdaten zur Verfügung gestellt wird.

Bevorzugt handelt es sich bei dem Behältnis um ein Behältnis, welches einen Bodenabschnitt aufweist, der eine Standfläche für dieses Behältnis ausbildet. Bevorzugt weist das Behältnis einen Grundkörper auf, der dazu geeignet und bestimmt ist, ein Innenvolumen auszubilden, welches zur Aufnahme einer von dem Behältnis aufzunehmenden Flüssigkeit bestimmt ist. Besonders bevorzugt weist das Behältnis einen Mündungsbereich auf, welche bevorzugt die einzige Öffnung dieses Behältnisses darstellt.

Bei einem weiteren Verfahren handelt es sich bei dem Behältnis um einen Kunststoffvorformling. Dieser weist ebenfalls einen Mündungsbereich auf sowie einen sich an diesen Mündungsbereich anschließenden Grundkörper, der durch Bearbeitungsvorgang, insbesondere einen Blasformvorgang und insbesondere einen Streckblasvorgang expandierbar ist. Bevorzugt weist dieser Kunststoffvorformling eine Bodenkuppe auf, und insbesondere eine Bodenkuppe, welche halbkugelartig ausgebildet ist. Besonders bevorzugt handelt es sich bei dem Kunststoffvorformling um ein Spritzgussteil. Besonders bevorzugt ist der Kunststoffvorformling aus PET hergestellt. Es wäre jedoch auch denkbar, dass der Kunststoffvorformling aus anderen Kunststoffmaterialien hergestellt ist oder etwa auch aus einem faserbasierten Material wie insbesondere aber nicht ausschließlich Pulpe.

Besonders bevorzugt ist an diesem Mündungsbereich ein Gewinde und insbesondere ein Außengewinde angeordnet, mittels dessen ein Behältnisverschluss auf das Behältnis geschraubt werden kann. Insbesondere handelt es sich bei dem Behältnis um ein Kunststoffbehältnis und insbesondere um ein PET - Behältnis. Die Erfindung wäre jedoch auch für Glasbehältnisse anwendbar.

Bei einem weiteren bevorzugten Verfahren weist das entworfene oder das zu entwerfende Behältnis in dem Bodenabschnitt Verstärkungselemente auf, welche die Stabilität dies Bodenabschnitts erhöhen. Bevorzugt handelt es sich bei wenigstens einem dieser Verstärkungselemente und bevorzugt bei mehreren dieser Verstärkungselemente um Stege, welche sich in einer radialen Richtung des Bodenabschnitts nach außen erstrecken.

Bei einer weiteren bevorzugten Ausführungsform werden Behältnisse entworfen, deren Wandungsstärke in wenigstens einem Abschnitt der Behältnisse variiert. Bei einem weiteren bevorzugten Verfahren werden auch in dem Bereich des Grundkörpers des Behältnisse Verstärkungselemente und/oder Verstärkungsstege vorgesehen.

Bevorzugt werden, insbesondere unter der Verwendung der künstlichen Intelligenz Ergebnisdaten ausgegeben, welche für ein entworfenes Design charakteristisch sind. Hierbei kann es sich beispielsweise um geometrische Daten handeln, wie etwa eine Höhe und einen Querschnitt und/oder einen Querschnittsverlauf des entworfenen Behältnisses. Daneben kann es sich bei den Ergebnisdaten beispielsweise auch um eine Gestalt des Grundkörpers des Behältnisses und/oder eine Gestalt des Bodens des Behältnisses handeln, bzw. um hierfür charakteristische Daten.

Bei einem weiteren bevorzugten Verfahren werden Grenzbereiche für die Ergebnisdaten ausgegeben. So kann etwa ein Bereich für eine Höhe des zu designenden Behältnisses aufgegeben werden.

Auch kann ein Bereich für eine Höhe oder einen Querschnitt eines zu entwerfenden Kunststoffvorformlings vorgegeben werden. Daneben kann auch eine Wandungsdicke eines Kunststoffvorformlings vorgegeben werden. Daneben kann bei dem Entwurf eines Kunststoffvorformlings auch vorgegeben werden, welches Behältnis bzw. welche Kunststoffflasche aus diesem Kunststoffvorformling gefertigt werden soll.

Daneben könnten auch andere für den Kunststoffvorformling relevante Daten vorgegeben werden wie etwa eine Ausgestaltung von dessen Tragring (etwa dessen Dicke oder dessen Durchmesser) oder eine Ausgestaltung eines Gewindes des Kunststoffvorformlings (wie etwa eine Höhe des Gewindes oder eine Gewindesteigung).

Weiterhin wäre es möglich, dass als Ergebnisdaten ein Bild eines vorgeschlagenen Behältnisdesigns (sowohl einer Kunststoffflasche als auch eines Kunststoffvorformlings) ausgegeben wird. So kann etwa ein Drahtmodell eines vorgeschlagenen Behältnisdesigns ausgegeben werden. Auch kann ein mit Daten versehenes Design ausgegeben werden, beispielsweise mit Informationen über eine Wanddicke und dergleichen.

Auch kann mit ausgegeben werden, welche Daten bei der Erstellung genutzt werden und evtl. auch wie unterschiedliche Daten gewichtet wurden.

Weiterhin wäre es möglich, dass im Rahmen der Ausgabe der Ergebnisdaten oder der Ergebniswerte mehrere Vorschläge für Behältnisdesigns ausgegeben werden. Dabei kann angegeben werden, durch welche Eigenschaften sich diese mehreren ausgegebenen Behätnisdesigns unterscheiden.

Bevorzugt werden Wertebereiche für die Ergebnisdaten oder Ergebniswerte ausgegeben. So kann etwa ausgegeben werden, dass das designte Behältnis eine Länge zwischen 20cm und 23cm und/oder einen Durchmesser zwischen 8cm und 10cm aufweisen sollte. Daneben kann etwa als Ergebniswert ausgegeben werden, dass das designte Behältnis zwischen fünf und sechs Standfüße haben sollte. Auch für einen Kunststoffvorformling können solche Ergebnisdaten oder Ergebniswerte ausgegeben werden. So kann etwa vorgegeben werden, dass der designte Kunststoffvorformling eine Länge zwischen 3cm und 15cm und einen Innendurchmesser zwischen 1cm und 3cm aufweisen soll. Auch können Ergebniswerte für eine Wandungsdicke des Kunststoffvorformlings vorgegeben werden.

Bevorzugt werden Ergebnisdaten miteinander korreliert. So kann etwa angegeben werden, dass ein Behältnis mit einer bestimmten Höhe einen bestimmten Querschnitt aufweisen sollte oder dessen Querschnitt in einem bestimmten Bereich liegen sollte.

Eine KI bzw. maschinelles Lernen kann beim Designen von Kunststoffbehältnissen und insbesondere von PET Behältnissen für einen oder mehrere Prozessschritte eingesetzt werden. Dazu ist vorgesehen, dass mehrere und insbesondere alle relevanten Daten zu dem Behältnis, auch zu anderen Kundenobjekten bzw. Kundendaten wie einem Kunststoffvorformling den Etiketten, den Verschlüssen oder den Abfüllprodukten, den verwendeten Maschinen, Kundenspezifikationen usw. abgelegt sind und insbesondere strukturiert abgelegt sind. Diese Daten werden der KI zumindest teilweise als Trainingsdaten zur Verfügung gestellt. Auch können beim Design eines Kunststoffvorformlings entsprechende Daten zur Verfügung gestellt werden wie etwa Daten betreffend die Kunststoffflasche, die aus diesem Kunststoffvorformling geformt werden soll oder aber eine Materialbeschaffenheit des Kunststoffvorformlings.

Bevorzugt ist durch einen Nutzer auswählbar, welche Daten der KI und/oder einer Modellerzeugungseinrichtung zur Verfügung gestellt werden. Dabei kann die KI jedoch auch Vorschläge unterbreiten, welche Daten zur Verfügung gestellt werden sollten.

Bei einem bevorzugten Verfahren werden zunächst Daten von bereits bestehenden Behältnissen und insbesondere PET-Behältnissen gesammelt, die beispielsweise auf einer Abfülllinie (insbesondere auch einer Spritzgießmaschine) verarbeitet werden bzw. wurden. Bevorzugt sind diese Daten aus einer Gruppe von Daten ausgewählt, welche geometrische Eigenschaften des Behältnisses wie Größe, Form und Wanddicke beinhaltet. Auch die Leistungsdaten wie eine Geschwindigkeit, eine Ausrichtung und Ausfallraten können ermittelt werden.

Dabei werden bevorzugt die Daten, welche die Behältnisse betreffen mittels Messeinrichtungen und/oder Meßsytemen bestimmt. Dabei kann es sich beispielsweise um optische Messeinrichtungen handeln, welche Daten der Behältnisse messen, wie etwa eine (insbesondere ortsaufgelöste) Wandungsdicke oder eine Transparenz. Auch können bevorzugt bestimmte Daten vorgegeben werden wie etwa ein Volumen des Behältnisses oder ein Füllprodukt. Daneben können auch Daten wie etwa ein gewünschtes Gewicht des leeren Behältnisses vorgegeben werden. Diese Messungen können sowohl an ausgeformten Behältnissen als auch an Kunststoffvorformlingen vorgenommen werden.

Bevorzugt wird mit den gesammelten Daten ein maschinelles Lernmodell entwickelt, welches die Beziehung zwischen den Eigenschaften des Behältnisses, seiner Leistung auf einer Abfülllinie und/oder den einzusetzenden Maschinen vorhersagen kann.

Dies kann beispielsweise durch die Verwendung von Regressionsalgorithmen oder neuronalen Netzen erfolgen. Das entwickelte maschinelle Lernmodell wird bevorzugt dann verwendet, um beim Designen von Behältnissen und insbesondere PET-Behältnissen in den verschiedenen Prozessschritten eingesetzt werden zu können.

Auch kann eine künstliche Intelligenz (KI) mittels neuronaler Netze und dergleichen durchgeführt bzw. verwendet werden. Besonders bevorzugt wird wenigstens ein von einer Bildaufnahmeeinrichtung aufgenommenes Bild oder ein von einer Messeinrichtung aufgenommener Wert oder eine Vielzahl von einer Messeinrichtung aufgenommener Werte ausgewertet. Dabei ist es möglich, dass ein Bildauswertungs - Modell maschinellen Lernens und/oder ein maschinelles Lernmodell erstellt wird.

Bevorzugt basiert das Bildauswertungs-Modell maschinellen Lernens und/oder das Modell maschinellen Lernens auf einem (künstlichen) neuronalen Netzwerk. Bevorzugt ist das neuronale Netzwerk als tiefes neuronales Netzwerk (Deep Neural Network, DNN), bei dem die parametrierbare Verarbeitungskette eine Mehrzahl von Verarbeitungsschichten aufweist, und/oder ein sogenanntes Convolutional Neural Network (CNN) (dt. Faltungsnetzwerk) und/oder ein rekurrentes Neuronales Netzwerk (RNN, engl. Recurrent Neural Network) ausgebildet.

Bevorzugt werden dem Bildauswertungs-Modell und/oder dem Modell maschinellen Lernens bzw. dem (künstlichen) neuronalen Netzwerk die (zu verarbeitenden) Daten, insbesondere die ortsaufgelösten Bilder (oder hiervon abgeleitete Daten) oder auch andere Messdaten wie etwa bestimmte Wanddicken oder auch Kundenvorgaben oder auch Daten betreffend ein Ausgangsmaterial der Kunststoffvorformlinge, als Eingangsgrößen zugeführt.

Bevorzugt bildet das Bildauswertungs-Modell und/oder das Modell maschinellen Lernens bzw. das künstliche neuronale Netzwerk die Eingangsgrößen in Abhängigkeit einer parametrierbaren Verarbeitungskette auf Ausgangsgrößen ab.

Besonders bevorzugt wird oder werden oder sind als Ausgangsgröße eine oder mehrere für ein designtes Behältnis oder ein auf Basis des Designs charakteristische Größen wie insbesondere eine Sollmaterialdicke, eine Höhe, ein Durchmesser, ein Verlauf einer Bodenkontur, eine geometrische Gestalt des Gewindes, Positionen und Ausgestaltungen von Verstärkungselementen in dem Bodenabschnitt und/oder dem Grundkörper, Anzahlen von Standfüßen des Behältnisses, die geometrische Gestalt von Standfüßen, oder dergleichen als charakteristische Größe gewählt.

Daneben kann als Ausgangsgröße auch ein Bild eines Behältnisses oder eines Teil hiervon ausgegeben werden.

Bevorzugt wird/wurde das Bildauswertungs-Modells maschinellen Lernens und/oder das maschinelle Lernmodell unter Verwendung vorgegebener Trainingsdaten trainiert, wobei bevorzugt durch das Training die parametrierbare Verarbeitungskette parametriert wird.

Bei einem bevorzugten Verfahren werden in dem Trainingsprozess des Bildauswertungs-Modells und/oder des Modells maschinellen Lernens Trainingsdaten verwendet, welche eine von der wenigstens einen Bildaufnahmeeinrichtung erfasste Vielzahl von ortsaufgelösten Bildern und/oder Messwerte von möglichen Behältnissen oder Abschnitten von Behältnissen umfassen.

Bei einem bevorzugten Verfahren werden in dem Trainingsprozess des Bildauswertungsmodells und/oder des Modells maschinellen Lernens Trainingsdaten verwendet, welche Vorgaben umfassen, welche einen Verarbeitungsprozess des Behältnisses betreffen, wie etwa ein Material der zur Herstellung der Kunststoffbehältnisse verwendeten Kunststoffvorformlinge, ein Recyclatanteil eines Materials der zur Herstellung der Kunststoffbehältnisse verwendeten Kunststoffvorformlinge, ein Volumen des herzustellenden Behältnisses, ein Gewicht des herzustellenden Kunststoffbehältnisses, eine Höhe oder einen Durchmesser des herzustellenden Kunststoffbehältnisses und dergleichen.

Daneben können auch Trainingsdaten verwendet werden, welche sich auf den Herstellungsprozess der Kunststoffvorformlinge beziehen wie etwa verwendete Spritzdrücke oder Temperaturen oder verwendete Geometrien von Spritzgussformen.

Bei einem bevorzugten Verfahren werden in dem Trainingsprozess des Bildauswertungs-Modells und/oder des Modells maschinellen Lernens Trainingsdaten verwendet, welche Kundenwünsche berücksichtigen, wie etwa eine ungefähre gewünschte Gestalt des herzustellenden Behältnisses.

Bei einem bevorzugten Verfahren werden in dem Trainingsprozess des Bildauswertungs-Modells und/oder des Modells maschinellen Lernens Trainingsdaten verwendet für Nachbearbeitungsvorgänge an dem zu designenden Behältnis charakteristisch sind

Dies bietet den Vorteil, dass bereits in dem Trainingsprozess spezifisch ein zu erreichendes Solldesign eines Behältnisses abgestimmt wird und beispielsweise damit spezifische Gegebenheiten des gewünschten Behältnisses, wie eine gewünschte Höhe, ein gewünschtes Bodendesign, eine gewünschte Etikettierung, eine gewünschte Bedruckung etc. berücksichtigt werden können.

Bevorzugt werden die zur Verwendung als Trainingsdaten vorgesehenen (von der wenigstens einen Bildaufnahmeeinrichtung aufgenommenen oder von einer anderen Messeinrichtung erfassten) ortsaufgelösten Bilder oder anderen Daten mit wenigstens einem Klassifikationsmerkmal und bevorzugt mit mehreren Klassifikationsmerkmalen versehen.

Daneben können auch andere Daten wie etwa Kundenvorgaben oder Daten, welche für eine nachfolgende Verarbeitung der Kunststoffbehältnisse charakteristisch sind, oder Daten, welche für den Herstellungsprozess der Kunststoffbehältnisse charakteristisch sind, mit Klassifikationsmerkmalen versehen werden.

Bevorzugt werden die (ortsaufgelösten) Bilder und/oder von Messeinrichtungen gemessene Werte zusammen mit anderen Daten, also etwa Daten welche eine nachfolgende Verarbeitung der Behältnisse und/oder ein zu verarbeitendes Material und/oder einen Verarbeitungsprozess charakteristisch sind, als Klassifikationsmerkmal(e) als Trainingsdatensatz (insbesondere auf einer flüchtigen und/oder der nicht-flüchtigen Speichereinrichtung) abgelegt und/oder verwendet. Bevorzugt wird auf diese Weise eine Vielzahl von Trainings-Datensätzen erzeugt.

Bei dem oder den Klassifikationsmerkmal(en) handelt es sich insbesondere um Rahmenbedingungen wie ein gewünschtes Behältnisvolumen, ein Ausgangsmaterial des Kunststoffbehältnisses, einen Designwunsch für ein herzustellendes Behältnis, geometrische Abmessungen eines Kunststoffvorformlings, eine abzufüllende Flüssigkeit oder dergleichen.

Denkbar ist auch, dass das Bildauswertungs-Modell und/oder das maschinelle Lernmodell lediglich zur Erkennung einiger der obig genannten Gattungen/Arten der herzustellenden Behältnisse trainiert ist/wird.

Denkbar wäre auch, dass das Bildauswertungs-Modell und/oder das Modell maschinellen Lernens lediglich zur Erkennung auf bestimmte Zielvorgaben hin trainiert ist, beispielsweise auf ein bestimmtes Ausgangsmaterial der Kunststoffvorformlinge oder auf ein bestimmtes abzufüllendes Getränk hin.

Wie oben erwähnt können jedoch auch mehrere dieser Schritte von dem Modell maschinellen Lernens durchgeführt werden.

Durch die Verwendung eines Bildauswertungs-Modells maschinellen Lernens und/oder eines Lernmodells maschinellen Lernens wird erreicht, dass eine für die Datenverarbeitung optimale (komplexe) Kombination verschiedener Merkmale sowie an verschiedenste unterschiedliche Designwünsche oder Zielvorgaben der Behältnisse oder Ausgangswerte (wie etwa ein Material) angepasste Merkmale (bzw. Merkmalskombinationen) identifiziert werden bzw. ermittelt wird.

Bei einem bevorzugten Verfahren sind die Kunststoffbehältnisse solche Kunststoffbehältnissen, welche mittels eines Blasformverfahrens und insbesondere mittels eines Streckblasverfahrens, insbesondere aus erwärmten Kunststoffvorformlingen hergestellt werden. Hierfür ist es bekannt, dass zunächst Kunststoffvorformlinge erwärmt werden, und diese innerhalb einer Blasformen dann zu den Kunststoffbehältnissen umgeformt und insbesondere geblasen werden.

Dies bedeutet, dass die besagten Blasformen bereits ein Negativ dieser Kunststoffbehältnissen ausbilden. Unter einem Design von Behältnissen wird dabei insbesondere auch ein Design der entsprechenden Formen, beispielsweise Blasformen verstanden, welche dazu geeignet und bestimmt sind die besagten Behältnisse zu fertigen.

Es kann sich, wie oben erwähnt, jedoch bei den Kunststoffbehältnissen auch um Kunststoffvorformlinge handeln. Hierfür ist es bekannt, dass diese mittels Spritzgießverfahren hergestellt werden.

Bei einem weiteren bevorzugten Verfahren werden solche Kunststoffbehältnisse designt, welche aus spritzgussgeformten Kunststoffvorformlingen hergestellt werden.

Bei einem weiteren bevorzugten Verfahren wird eine Vielzahl von für ein Herstellungsverfahren zum Herstellen des zu entwerfenden Behältnisses charakteristischen Herstellungsparameter berücksichtigt. Dabei kann auch eine Vielzahl von für ein Herstellungsverfahren zum Herstellen von Kunststoffvorformlingen charakteristischen Herstellungsparametern berücksichtigt werden.

Bevorzugt wird wenigstens ein Teil dieser Herstellungsparameter dieser künstlichen Intelligenz als zweite Trainingsdaten bzw. als zweiter Trainingsdatensatz zur Verfügung gestellt.

Besonders bevorzugt wird wenigstens ein Teil der physikalischen Parameter und/oder wenigstens ein Teil der Herstellungsparameter anhand von bereits gefertigten Kunststoffbehältnissen ermittelt. Hierbei ist zu berücksichtigen, dass die Daten für ein Herstellungsverfahren und auch die physikalischen Daten der Kunststoffbehältnissen üblicherweise bekannt sind.

Bei einem weiteren bevorzugten Verfahren wird anhand eines Teils der physikalischen Parameter und bevorzugt anhand aller physikalischen Parameter ein Modell maschinellen Lernens erstellt.

Bevorzugt wird dieses Modell maschinellen Lernens der künstlichen Intelligenz zur Verfügung gestellt und/oder von der künstlichen Intelligenz verwendet.

Besonders bevorzugt wird sowohl anhand eines Teils der physikalischen Parameter als auch anhand eines Teils der Herstellungsparameter das genannte Modell maschinellen Lernens erstellt.

Es wäre dabei möglich, sämtliche Daten oder Datengattungen als Trainingsdaten zu verwenden. Es wäre jedoch auch möglich, dass für die Erstellung bestimmter Behältnisdesigns nur eine bestimmte Anzahl oder nur ein Teil dieser Daten verwendet wird.

Falls beispielsweise feststeht, dass die Behältnisse künftig nur aus frischem d.h. nicht recycletem Kunststoffmaterial bestehen wäre es möglich, bestimmte Daten, etwa für eine Wanddickenverteilung charakteristische Daten nicht zu erfassen.

Fall beispielsweise feststeht, dass die zu fertigen Behältnisse für die Befüllung mit einem nicht karbonisierten Getränk dienen, können ggfs. bestimmte Daten, welche sich auf die Ausgestaltung der Behältnisböden beziehen außer Acht gelassen werden und insbesondere bei der Erstellung des Modells maschinellen Lernens außer Acht gelassen werden.

Bei einem weiter bevorzugten Verfahren ist das Modell maschinellen Lernens dazu geeignet und bestimmt, eine Beziehung zwischen wenigstens einem der physikalischen Parameter und bevorzugt mehreren physikalischen Parametern und wenigstens einem Herstellungsparameter und bevorzugt mehreren Herstellungsparametern zu ermitteln. Es wäre jedoch auch denkbar, dass eine solche Beziehung dem Modell maschinellen Lernens vorgegeben wird.

Bevorzugt wird eine Vielzahl solcher Beziehungen ermittelt. So kann beispielsweise ermittelt werden, wie sich ein bestimmtes Material der Kunststoffvorformlinge auf den Blasprozess auswirkt. Auch kann ermittelt werden, wie sich beispielsweise eine spezielle Bodengestalt des Kunststoffbehältnisses auf andere physikalische Eigenschaften wie etwa dessen Stabilität auswirkt.

Bevorzugt kann eine KI verwendet werden, um die Leistung von Behältnissen vorherzusagen, wobei insbesondere die Messdaten von früheren Designs, deren Simulationsergebnisse und/oder reale Ergebnisdaten bzw. Problemfälle und/oder deren Lösungsdaten berücksichtigt werden.

Dabei kann dies wiederum im Vorfeld oder während des Designprozesses analysiert werden und dem Behälterdesigner kann ein direktes Feedback und/oder ein Input geliefert werden, welche Parameter des neu zu erstellenden Behältnisses gegebenenfalls wie angepasst werden müssen, damit das Behältnis die erforderlichen Eigenschaften zum Verarbeiten besitzt.

Bei einem weiteren bevorzugten Verfahren kann diese Vorhersage über Behältnisqualitäten beispielsweise durch die Verwendung von Regressionsalgorithmen und/oder von neuronalen Netzen erfolgen.

Bei einem weiteren bevorzugten Verfahren werden zur Ermittlung einer gewünschten Gestalt des herzustellenden Behältnisses Sollvorgaben berücksichtigt und/oder zugrunde gelegt. Dabei kann es sich insbesondere auch um Designwünsche des Kunden handeln. Bevorzugt werden diese Sollvorgaben von einem Benutzer vorgegeben oder sind von einem Benutzer vorgebbar.

Dieser kann beispielsweise vorgeben, welche Art Boden erwünscht ist (z.B. sog. Champagnerboden oder ein Boden mit Standfüßen) oder welche bestimmte Gestalt eines Grundkörpers erreicht werden soll. So kann eine Kundenvorgabe etwa darin bestehen, dass eine Gestalt eines bestimmten Behältnisses aus den 1970er Jahren imitiert werden soll oder aber ein Design des gleichen Kunden weitestmöglich beibehalten werden soll.

Bei einem bevorzugten Verfahren wird oder ist wenigstens ein für ein zu entwerfendes Behältnisses charakteristischer physikalischer Parameter und bevorzugt sind mehrere oder die für ein zu entwerfendes Behältnisses charakteristischen Parameter aus einer Gruppe von Parametern ausgewählt, welche eine Größe des herzustellenden und/oder zu designenden Behältnisses, eine Form des herzustellenden und/oder zu designenden Behältnisses, einen Querschnitt des herzustellenden und/oder zu designenden Behältnisses, einen Querschnittsverlauf des herzustellenden und/oder zu designenden Behältnisses ein Material des herzustellenden und/oder zu designenden Behältnisses, einen Recyclatanteil des Materials des herzustellenden und/oder zu designenden Behältnisses, ein Innenvolumen des herzustellenden oder zu designenden Behältnisses, eine Wanddicke des herzustellenden oder zu designenden Behältnisses, eine Wanddickenverteilung des herzustellenden oder zu designenden Behältnisses, eine Größe eines zur Herstellung des Kunststoffbehältnisses zu verwendenden. Kunststoffvorformlings, ein Material des zur Herstellung des Kunstbehältnisses verwendeten Kunststoffvorformlings, einen Recyclatanteil eines Materials des zur Herstellung des Kunststoffbehältnisses verwendeten Kunststoffvorformlings, einen Verschlusstyp des herzustellenden oder zu designenden Kunststoffbehältnisses, eine Wanddicke des zur Herstellung des zu designenden Kunststoffbehältnisses verwendeten Kunststoffvorformlings, eine Gestalt einer Mündung des herzustellenden oder zu designenden Kunststoffbehältnisses und dergleichen enthält.

Bei einem weiteren bevorzugten Verfahren ist wenigstens ein für das Herstellungsverfahren zum Herstellen des zu entwerfen Behältnisses charakteristischer Herstellungsparameter aus einer Gruppe von Herstellungsparametern ausgewählt, welche für einen Herstellungsvorgang von Kunststoffvorformlingen, welche zum Herstellen der (zu designenden) Kunststoffbehältnisse verwendet werden, charakteristisch sind

Hierbei kann es sich insbesondere um ein verwendetes oder zu verwendendes Kunststoffgranulat, ein Herstellungsverfahren, eine für die Herstellung der Kunststoffvorformlinge verwendete Temperatur, eine Temperatur der Kavitäten, ein für die Herstellung der Kunststoffvorformlinge verwendeter Druck wie etwa ein Einspritzdruck, Arbeitsparameter einer Plastifizierungseinheit oder dergleichen handeln.

Weiterhin kann es sich um Herstellungsparameter handeln welche für einen Erwärmungsvorgang der Kunststoffvorformlinge, welche zum Herstellen der Kunststoffbehältnisse verwendet werden charakteristisch sind, wie insbesondere eine Erwärmungstemperatur, eine Heizleistung, eine Art einer Erwärmungseinrichtung (beispielsweise IR- Erwärmung und/oder Mikrowellenerwärmung), eine Transportgeschwindigkeit während einer Erwärmung, eine Temperaturdifferenz bei der Erwärmung und dergleichen.

Weiterhin kann es sich um einen für einen Umformungsvorgang, (durch den die Kunststoffvorformlinge zu den Kunststoffbehältnissen umgeformt werden) charakteristischen Parameter handeln.

Insbesondere handelt es sich dabei um einen verwendeten Blasdruck, die Anzahl unterschiedlicher Druckstufen, die Drücke unterschiedlicher Druckstufen, eine Geschwindigkeit einer Reckstangenbewegung, ein Bewegungsprofil einer Reckstangenbewegung, eine Abstimmung zwischen einer Reckstangenbewegung und einer Druckbeaufschlagung, eine Zeitdauer des Umformungsvorgangs, eine Eingangstemperatur der Kunststoffvorformlinge vor dem Umformungsvorgang, ein Temperaturprofil der Kunststoffvorformlinge in deren Längsrichtung und/oder Umfangsrichtung und dergleichen.

Bei Einem weiteren bevorzugten Verfahren wird oder ist wenigstens ein für einen Nachbehandlungsvorgang eines zu entwerfen Behältnisses und/oder eines herzustellenden Behältnisses charakteristischer Nachbehandlungsparameter berücksichtigt.

Besonders bevorzugt wird wenigstens ein und bevorzugt wenigstens ein Teil dieser Nachbehandlungsparameter dieser künstlichen Intelligenz als dritte Trainingsdaten zur Verfügung gestellt.

Bei einem bevorzugten Verfahren sind die Nachbehandlungsparameter aus einer Gruppe von Nachbehandlungsparametern ausgewählt, welche die Art und/oder Menge einer Flüssigkeit, welche in das Behältnis einzufüllen ist, die Art und/oder Größe eines an dem Behältnis anzubringenden Etiketts, die Position eines an dem Behältnis anzubringen Etiketts, die Art und/oder Größe eines an dem Behältnis anzubringenden Aufdrucks, die Position eines an dem Behälter des aufzubringenden Aufdrucks, ein zum Sterilisieren des Behältnisses zu verwendendes Sterilisationsmittel, die Art eines an dem Behältnis anzubringen Behältnisverschlusses, eine Bodenform des Behältnisses, eine Bodenkühlung des hergestellten Behältnisses und dergleichen enthält.

Daneben kann auch die Art des in das Behältnis abzuführenden Getränks bzw. allgemein der Flüssigkeit berücksichtigt werden. Dabei können Eigenschaften dieser Flüssigkeit wie etwa eine Zähigkeit, eine Karbonisierung, ein Alkoholgehalt, ein Zuckergehalt, eine Farbe, deren Bestandteile oder dergleichen berücksichtigt werden.

Bei einem weiteren bevorzugten Verfahren wird die künstliche Intelligenz verwendet, um Eigenschaften der künftig herzustellenden oder hergestellten Behältnisse vorherzusagen. Bevorzugt erfolgt dabei diese Vorhersage auf Basis des Modells maschinellen Lernens. So kann beispielsweise vorhergesagt werden, welchen Innendrücken die herzustellenden Behältnisse standhalten können.

Bei einem weiteren bevorzugten Verfahren wird die künstliche Intelligenz verwendet, um den Entwurfsprozess zu automatisieren.

Daneben kann auch während des Entwurfs eine Kommunikation mit einem Entwerfer oder Benutzer ermöglicht sein oder werden.

Bei einem weiteren bevorzugten Verfahren kann die künstliche Intelligenz beispielsweise durch die Verwendung von natürlicher Sprache oder Text mit einem Designer kommunizieren. Bevorzugt ist es dabei möglich, dass der Designer vor oder während der Erstellung von Behältnisdesigns anhand der vorliegenden Informationen direkt unterstützt wird. So kann die KI einem Designer spezielle Designanteile, beispielsweise ein spezielles Bodendesign für ein Behältnis vorschlagen.

Daneben wird bevorzugt eine Automatisierung von Designprozessen vorgenommen. So kann eine KI beispielsweise durch die Verwendung von generellen und generativen Designmethoden das Erstellen von vielen Designoptionen automatisieren. Bevorzugt, kann diese anhand von vorgegebenen Anforderungen und Einschränkungen auch Designoptionen bewerten.

In einem weiteren Schritt kann die KI (beispielsweise mittels Optimierungsalgorithmen) auch dazu verwendet werden, um das Design von Behältnissen selbstständig zu optimieren oder zu verbessern. Dabei können insbesondere die Wechselwirkungen unterschiedlicher Parameter berücksichtigt werden, etwa ermittelt werden, wie sich eine bestimmte Wanddicke des Behältnisses auf die Stabilität von dessen Boden auswirkt.

Auf diese Weise können beispielsweise bestimmte Ziele erreicht werden, wie etwa eine Gewichtseinsparung, eine Materialeinsparung oder eine Leistungsverbesserung, indem insbesondere mögliche Schwachstellen des Behältnisses in Bezug auf die künftigen Gegebenheiten identifiziert werden.

Bei einem bevorzugten Verfahren werden - insbesondere automatisiert - Änderungen vorgenommen, um das Behältnisdesign entsprechend zu verbessern.

Dabei können beispielsweise durch die Verwendung von Simulationsalgorithmen die Belastungen simuliert werden, denen das Behältnis ausgesetzt sein wird. Auf diese Weise können die Auswirkungen auf die Struktur des Behältnisses bewertet werden.

Die vorliegende Erfindung erlaubt daher die Berücksichtigung unterschiedlicher Einflussfaktoren auf das jeweilige Behältnisdesign.

Beispielsweise ist es möglich, die KI zu verwenden um die Leistung von Behältnissen vorherzusagen. Dabei können Daten von früheren Designs analysiert werden und dem Designer wird bevorzugt ein Feedback und/oder ein Input gegeben, welche Behältnisparameter angepasst werden müssen und/oder können und bevorzugt auch, was durch solche Anpassungen bewirkt wird.

Weiterhin ist bevorzugt ein Konfigurationsschritt vorgesehen, in welchem ein Nutzer ein von ihm gewünschtes Behältnis konfigurieren kann. Bevorzugt wird diese Konfiguration auch als Eingangsgröße bei der Erstellung des Modells maschinellen Lernens verwendet.

Wie erwähnt, kann auch eine Kommunikation zwischen der KI und dem Designer stattfinden.

Die KI kann unter bevorzugter Verwendung von generativen Designmethoden das Design von Designoptionen automatisieren. In einem weiteren Schritt kann die KI das Design bevorzugt auch optimieren (wie oben erwähnt, beispielsweise zur Gewichtseinsparung, zur Materialeinsparung oder zur Leistungsverbesserung).

Die vorliegende Erfindung ist weiterhin auf ein Kunststoffbehältnis und insbesondere ein Getränkebehältnis oder einen Kunststoffvorformling gerichtet, wobei es sich bei diesen Kunststoffbehältnis um ein blasgeformtes Behältnis oder einen Kunststoffvorformling und insbesondere einen spritzgießgeformten Kunststoffvorformling handelt. Das Behältnis ist oder wird erfindungsgemäß durch ein Verfahren der oben beschriebenen Art entworfen.

Die vorliegende Erfindung ist weiterhin auf eine Software, insbesondere eine auf einem Datenträger gespeicherte Software gerichtet, welche dazu geeignet und bestimmt ist, ein Verfahren der oben beschriebenen Art durchzuführen.

Die vorliegende Erfindung ist weiterhin auf einen Datenträger mit einer darauf gespeicherten Software gerichtet, wobei die Software dazu geeignet ist, ein oben beschriebenes Verfahren auszuführen.

Vorteile und Zweckmäßigkeiten sind der nachfolgenden Beschreibung in Verbindung mit der Zeichnung zu entnehmen. Hierbei zeigen:

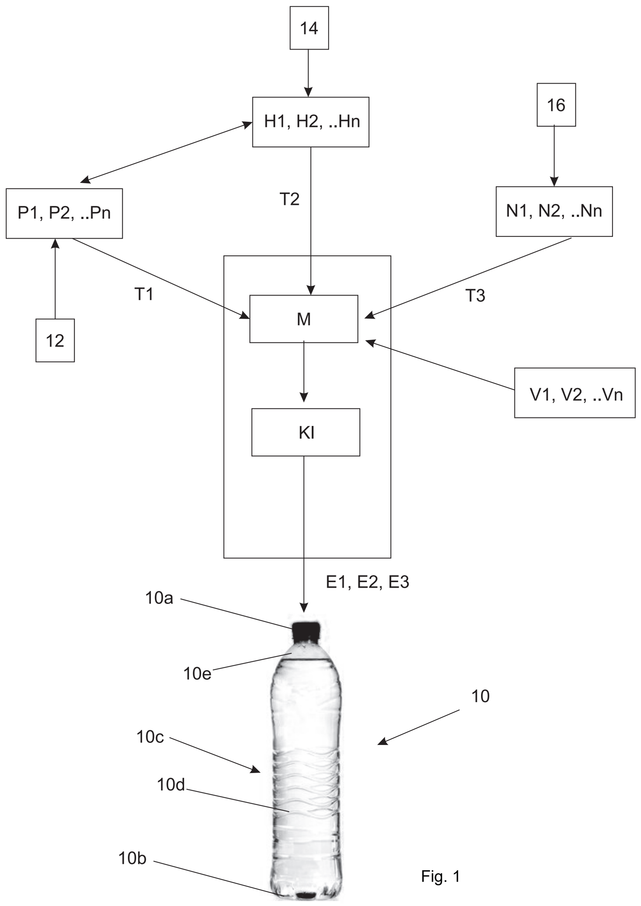

- Fig. 1: eine schematische Darstellung zur Veranschaulichung eines erfindungsgemäßen Verfahrens.

Fig. 1 zeigt eine schematische Darstellung zur Veranschaulichung eines erfindungsgemäßen Verfahrens.

Dabei kennzeichnet das Bezugszeichen M eine Modellerzeugungseinheit, welche dazu geeignet und bestimmt ist, ein Modell maschinellen Lernens auf Basis von Trainingsdaten zu erzeugen. Das von der Modellerzeugungseinheit erstellte Modell maschinellen Lernens wird von der Künstlichen Intelligenz KI verwendet, um Ergebnisdaten und/oder Ergebniswerte E1, E2, E3 auszugeben, welche für ein designtes Behältnis charakteristisch sind.

Auch kann ein Bild eines designten Behältnisses 10 ausgegeben werden. Dieses Behältnis weist dabei bevorzugt einen Boden bzw. Bodenabschnitt 10b und einen Verschluss 10a, welcher hier auf ein Gewinde des Behältnisses aufgeschraubt ist, auf.

Das Bezugszeichen 10c kennzeichnet einen Grundkörper des Behältnisses, welcher hier eine Vielzahl von Verstärkungsrippen 10d aufweist. Das Bezugszeichen 10e kennzeichnet einen Schulterbereich des Behältnisses.

Die Ergebniswerte können beispielsweise für eine Höhe des designten Behältnisses 10 charakteristisch sein oder auch für dessen Durchmesser. Daneben kann als Ergebniswert die Anzahl und/oder die Form der Verstärkungselemente 10d angegeben sein.

Es wäre auch möglich, dass ein Nutzer des Verfahrens weitere Vorgaben tätigt, beispielsweise die Anzahl der Verstärkungselemente und/oder deren Gestalt ändert und daraufhin die KI interaktiv neue Ergebniswerte ausgibt und ggfs. auch ein geändertes Bild des designten Behältnisses.

Die Bezugszeichen P1, P2...Pn kennzeichnen für das Behältnis charakteristische Parameter, welche der Modellerzeugungseinheit als erste Trainingsdaten T1 zugeführt werden. Dabei bezeichnet das Bezugszeichen 12 eine Messeinrichtung, mittels derer diese ersten Parameter aufgenommen oder erfasst wurden.

Es ist dabei möglich, dass das Erfassen der physikalischen Parameter bzw. der für das Behältnis charakteristischen Parameter mittels eine oder der hier genannten Messeinrichtung vorab (also nicht während Produktion) erfolgt. Es wäre also denkbar, dass vor Erstellen des Designs, beispielsweise in einer Trainingsfahrt physikalische Parameter eines gewünschten Behälters erfasst werden.

Es wäre aber auch denkbar, dass diese Parameter schon vorab in anderen Maschinen oder anderen Produktionsläufen (insbesondere in derselben Maschine) ermittelt worden sind und bevorzugt in einer Speichereinrichtung abgespeichert worden sind.

Bevorzugt sind mehrere Messeinrichtungen vorgesehen, welche bevorzugt anhand bereits vorhandener Behältnisse die ersten Parameter P1, P2...Pn erfassen. Auch könnten derartige erste Parameter durch einen Benutzer vorgegeben werden wie etwa die Höhe von Behältnissen oder auch die Gestalt eines Bodens dieser Behältnisse.

Die Bezugszeichen H1, H2...Hn zeigen Herstellungsparameter, welche für das oder die Verfahren, mittels denen Kunststoffbehältnisse hergestellt wurden, charakteristisch sind. Dabei bezeichnet das Bezugszeichen 14 eine Speichereinrichtung, welche dazu geeignet und bestimmt ist, solche Herstellungsparameter, beispielsweise einen verwendeten Druck bei der Blasformung abzuspeichern. Dabei können diese Parameter beispielsweise durch einen Betrieb von Produktionsanlagen gewonnen werden.

Bevorzugt sind die Herstellungsparameter H1, H2, Hn und die Behältnisparameter wenigstens teilweise einander zugeordnet.

So können beispielsweise einem bestimmten Satz an Behältnisparametern (bespielsweise Material, Höhe des Behältnisses, Wanddicke des Behältnisses) diejenigen Herstellungsparameter zugeordnet sein, mit denen dieses Behältnis erzeugt wurde.

Dabei wäre es auch möglich, dass die bereits früher gefertigten Behältnisse eine Markierung aufweisen, welche eine Identifikation dieser Behältnisse ermöglicht und welche bevorzugt auch eine Ermittlung derjenigen Herstellungsparameter, mit denen dieses Behältnis erzeugt wurde, ermöglicht.

Die Bezugszeichen N1, N2...Nn kennzeichnen für einen Nachbehandlungsvorgang des zu designenden Behältnisses charakteristische Parameter, wie etwa die Art und Größe eines an dem Behältnis anzubringenden Etiketts oder Aufdrucks, eine Flüssigkeit, mit welcher dieses Behältnis befüllt werden soll oder die Art eines Verschlusses, der an diesem Behältnis anzubringen ist oder angebracht wird.

Hierbei kenn eine Benutzerschnittstelle 16 vorgesehen sein, über welcher derartige Daten eingegeben werden können. Es wäre jedoch auch denkbar, dass derartige Informationen im Rahmen der Herstellungsdaten mitbestimmt werden.

Daneben kann noch eine weitere Benutzerschnittstelle vorgesehen sein, über welche Vorgaben V1, V2, ...Vn vorgegeben werden können etwa ein gewünschtes Innenvolumen des Behältnisses, eine Art des Bodens des Behältnisses, eine gewünschte Höhe oder ein gewünschter Durchmesser. Auch wäre es bevorzugt möglich, dass als Vorgaben Bilder eines gewünschten Designs eingegeben werden etwa anhand von bereits vorhandenen Designs.

So kann beispielsweise vorgegeben werden, welchen bekannten Design das gewünschte Design ähneln soll.

Die vorliegende Erfindung ist weiterhin auf Vorrichtung zum Entwerfen von Behältnissen und insbesondere von Kunststoffbehältnissen und insbesondere von Getränkebehältnissen gerichtet, mit einer Datenverarbeitungseinrichtung wobei dieser Datenverarbeitungseinrichtung eine Vielzahl von für ein zu entwerfendes Behältnis charakteristischen physikalischen Parameter zuführbar ist und diese Datenverarbeitungseinrichtung dazu geeignet und bestimmt ist, diese Daten bei dem Entwurf der Behältnisse zu berücksichtigen,

Erfindungsgemäß ist die die Datenverarbeitungseinrichtung dazu geeignet und bestimmt ein Verfahren zum Entwerfen der Behältnisse und insbesondere ein wie oben beschriebenes Verfahren durchzuführen und für wenigstens einen Verfahrensschritt des Verfahrens eine künstliche Intelligenz (KI) einzusetzen, wobei zumindest ein Teil dieser physikalischen Parameter dieser künstlichen Intelligenz (KI) als erste Trainingsdaten zur Verfügung stellbar ist.

Bei einer weiteren bevorzugten Ausführungsform weist die Vorrichtung eine Erfassungseinrichtung zum Erfassen von für (Kunststoff)behältnisse charakteristischen Daten auf. Weiterhin weist die Vorrichtung bevorzugt eine Erfassungseinrichtung auf, welche dazu geeignet und bestimmt ist, Herstellungsparameter zu erfassen, welche für die Herstellung von Kunststoffbehältnissen charakteristisch sind.

Bevorzugt ist die Datenverarbeitungseinrichtung dazu eingerichtet, geeignet und/oder bestimmt, das obig beschriebene Verfahren sowie alle bereits obig im Zusammenhang mit dem Verfahren beschriebene Verfahrensschritte einzeln oder in Kombination miteinander auszuführen. Umgekehrt kann das Verfahren mit allen im Rahmen Datenverarbeigungseinrichtung beschriebenen Merkmalen einzeln oder in Kombination miteinander ausgestattet sein.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verfahren zum Entwerfen von Behältnissen und insbesondere von Kunststoffbehältnissen und insbesondere von Getränkebehältnissen, wobei eine Vielzahl von für ein zu entwerfendes Behältnis charakteristischen physikalischen Parametern (P1, P2, ...Pn) berücksichtigt wird,
**dadurch gekennzeichnet, dass**
für wenigstens einen Verfahrensschritt des Verfahren eine künstliche Intelligenz eingesetzt wird, wobei zumindest ein Teil dieser physikalischen Parameter dieser künstlichen Intelligenz (KI) als erste Trainingsdaten zur Verfügung gestellt wird.

2. Verfahren nach Anspruch 1,
**dadurch gekennzeichnet, dass**
die Kunststoffbehältnisse solche Kunststoffbehältnisse sind, welche mittels eines Blasformverfahrens und insbesondere mittels eines Streckblasverfahrens aus erwärmten Kunststoffvorformlingen hergestellt werden.

3. Verfahren nach wenigstens einem der vorangegangenen Ansprüche,
**dadurch gekennzeichnet, dass**
Ergebnisdaten ausgegeben werden, welche für ein entworfenes Design charakteristisch sind, wobei insbesondere ein Bild eines vorgeschlagenen Behältnisdesigns ausgegeben wird.

4. Verfahren nach wenigstens einem der vorangegangenen Ansprüche,
**dadurch gekennzeichnet, dass**
eine Vielzahl von für ein Herstellungsverfahren zum Herstellen des zu entwerfenden Behältnisses charakteristische Herstellungsparameter (H1, H2, H3, ...Hn) berücksichtigt wird wobei bevorzugt zumindest ein Teil dieser Herstellungsparameter (H1, H2, H3,...Hn) dieser künstlichen Intelligenz (KI) als zweite Trainingsdaten zur Verfügung gestellt wird.

5. Verfahren nach wenigstens einem der vorangegangenen Ansprüche,
**dadurch gekennzeichnet, dass**
die Ermittlung wenigstens eines Teils der physikalischen Parameter (P1, P2, P3) und/oder wenigstens eines Teils der Herstellungsparameter (H1, H2, H3) anhand von bereits gefertigten Kunststoffbehältnissen erfolgt.

6. Verfahren nach wenigstens einem der vorangegangenen Ansprüche, **dadurch gekennzeichnet, dass**
anhand wenigstens eines Teils der physikalischen Parameter (P1, P2, P3) und/oder anhand wenigstens eines Teils der Herstellungsparameter (H1, H2, H3) ein Modell (M) maschinellen Lernens erstellt wird, wobei dieses Modell maschinellen Lernens bevorzugt der künstlichen Intelligenz zur Verfügung gestellt wird.

7. Verfahren nach dem vorangegangenen Anspruch,
**dadurch gekennzeichnet, dass**
das Modell maschinellen Lernens dazu geeignet und bestimmt ist, eine Beziehung zwischen wenigstens einem physikalischen Parameter (P1, P2, P3) und wenigstens einem Herstellungsparameter (H1, H2, H3) zu ermitteln und/oder vorherzusagen wobei bevorzugt die Vorhersage durch die Verwendung von Regressionsalgorithmen und/oder neuronalen Netzen erfolgt oder erfolgen kann.

8. Verfahren nach wenigstens einem der vorangegangenen Ansprüche,
**dadurch gekennzeichnet, dass**
zur Ermittlung einer gewünschten Gestalt des herzustellenden Behältnisses Sollvorgaben berücksichtigt und/oder zugrunde gelegt werden.

9. Verfahren nach wenigstens einem der vorangegangenen Ansprüche,
**dadurch gekennzeichnet, dass**
wenigstens ein für ein zu entwerfendes Behältnis charakteristischer physikalischer Parameter (P1, P2, ...Pn) und bevorzugt die für ein zu entwerfendes Behältnis charakteristischen physikalischen Parameter (P1, P2, ...Pn) aus einer Gruppe von Parametern ausgewählt sind, welche eine Größe des herzustellenden Behältnisses, eine Form des herzustellenden Behältnisses, einen Querschnitt eines herzustellenden Behältnisses, ein Material des herzustellenden Behältnisses, ein Recyclatanteil des Materials des herzustellenden Behältnisses, ein Innenvolumen des herzustellenden Behältnisses, eine Wanddicke des herzustellenden Behältnisses, eine Größe eines zur Herstellung des Kunststoffbehältnisses zu verwendenden Kunststoffvorformlings, ein zur Herstellung des Kunststoffvorformlings verwendetes Material, ein Recyclatanteil eines Materials des zur Herstellung des Kunststoffbehältnisses verwendeten Kunststoffvorformlings, einen Verschlusstyp des herzustellenden Kunststoffbehältnisses, eine Wanddicke des zur Herstellung des Kunststoffbehältnisses verwendeten Kunststoffvorformlings, eine Gestalt einer Mündung des herzustellenden Kunststoffbehältnisses und dergleichen enthält.

10. Verfahren nach wenigstens einem der vorangegangenen Ansprüche,
**dadurch gekennzeichnet, dass**
wenigstens ein für das Herstellungsverfahren zum Herstellen des zu entwerfenden Behältnisses charakteristischer Herstellungsparameter (H1, H2, H3...) aus einer Gruppe von Herstellungsparametern ausgewählt ist, welche für einen Herstellungsvorgang von Kunststoffvorformlingen, welche zum Herstellen der Kunststoffbehältnisse verwendet werden charakteristisch sind, wie insbesondere ein verwendetes oder ein zu verwendendes Kunststoffgranulat, ein Herstellungsverfahren, eine für die Herstellung verwendete Temperatur, ein für die Herstellung der Kunststoffvorformlinge verwendeter Druck, und/oder welcher für einen Erwärmungsvorgang der Kunststoffvorformlinge welche zum Herstellen der Kunststoffbehältnisse verwenden werden charakteristisch ist, wie insbesondere eine Erwärmungstemperatur, eine Heizleistung einer Erwärmungseinrichtung, eine Transportgeschwindigkeit während einer Erwärmung, eine Temperaturdifferenz bei der Erwärmung und dergleichen enthält und/oder welcher für einen Umformungsvorgang, durch welchen Kunststoffvorformlinge zu den Kunststoffbehältnissen umgeformt werden charakteristisch ist, wie insbesondere ein verwendeter Blasdruck, ein Ventilschaltzeitpunkt zum Beaufschlagen mit Druckluft, ein Ventilschaltzeitpunkt zum Recyceln, die Anzahl unterschiedlicher Druckstufen, eine Geschwindigkeit einer Reckstangenbewegung eine Abstimmung zwischen einer Reckstangenbewegung und einer Druckbeaufschlagung, eine Zeitdauer des Umformungsvorgangs, eine Eingangstemperatur der Kunststoffvorformlinge vor dem Umformungsvorgang, ein Temperaturprofil der Kunststoffvorformlinge in deren Längsrichtung und dergleichen enthält.

11. Verfahren nach wenigstens einem der vorangegangenen Ansprüche,
**dadurch gekennzeichnet, dass**
wenigstens ein für einen Nachbehandlungsvorgang eines zu entwerfenden Behältnis und/oder eines herzustellenden Behältnisses charakteristischer Nachbehandlungsparameter (N1, N2, N3, N4) berücksichtigt wird und wobei bevorzugt zumindest ein Teil dieser Nachbehandlungsparameter (N1, N2, N3..) dieser künstlichen Intelligenz (KI) als dritte Trainingsdaten zur Verfügung gestellt wird.

12. Verfahren nach dem vorangegangenen Anspruch,
**dadurch gekennzeichnet, dass**
die Nachbehandlungsparameter aus einer Gruppe von Nachbehandlungsparametern ausgewählt sind, welche die Art und/oder Menge einer Flüssigkeit welche in das Behältnis einzufüllen ist, die Art und/oder Größe eines an dem Behältnis anzubringenden Etiketts, die Art eines an dem Behältnis anzubringenden Aufdrucks, ein zum Sterilisieren des Behältnisses zu verwendendes Sterilisationsmittel, die Art eines an dem Behältnis anzubringenden Behältnisverschlusses, eine Bodenkühlung eines hergestellten Behältnisses und dergleichen enthält.

13. Verfahren nach wenigstens einem der vorangegangenen Ansprüche,
**dadurch gekennzeichnet, dass**
die künstliche Intelligenz verwendet wird, um Eigenschaften künftig hergestellter Behältnisse vorherzusagen und/oder um den Entwurfsprozess zu automatisieren und/oder um während des Entwurfs eine Kommunikation mit dem Entwerfer zu ermöglichen.

14. Kunststoffbehältnis und insbesondere Getränkebehältnis oder Kunststoffvorformling, **dadurch gekennzeichnet, dass**
das Kunststoffbehältnis oder der Kunststoffvorformling mittels eines Verfahrens nach wenigstens einem der vorangegangenen Ansprüche entworfen wurde oder ist.

15. Vorrichtung zum Entwerfen von Behältnissen und insbesondere von Kunststoffbehältnissen und insbesondere von Getränkebehältnissen oder Kunststoffvorformlingen, mit einer Datenverarbeitungseinrichtung wobei dieser Datenverarbeitungseinrichtung eine Vielzahl von für ein zu entwerfendes Behältnis charakteristischen physikalischen Parameter (P1, P2, ...Pn) zuführbar ist und diese Datenverarbeitungseinrichtung dazu geeignet und bestimmt ist, diese Daten bei dem Entwurf der Behältnisse zu berücksichtigen, **dadurch gekennzeichnet, dass** die Datenverarbeitungseinrichtung dazu geeignet und bestimmt ist ein Verfahren zum Entwerfen der Behältnisse durchzuführen und für wenigstens einen Verfahrensschritt des Verfahrens eine künstliche Intelligenz (KI) einzusetzen, wobei zumindest ein Teil dieser physikalischen Parameter dieser künstlichen Intelligenz (KI) als erste Trainingsdaten zur Verfügung zu stellen ist.
